(19) Europäisches Patentamt
European Patent Office
Office européen des brevets

(11) EP 3 285 408 A1

(12) EUROPEAN PATENT APPLICATION

(43) Date of publication:
21.02.2018 Bulletin 2018/08

(51) Int Cl.:
H04B 7/04 (2017.01)    H04W 36/00 (2009.01)
H04B 7/06 (2006.01)

(21) Application number: 16290154.0

(22) Date of filing: 17.08.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: ALCATEL LUCENT
92100 Boulogne-Billancourt (FR)

(72) Inventors:
• Aziz, Danish
70435 Stuttgart (DE)
• Aydin, Osman
70435 Stuttgart (DE)

(74) Representative: DREISS Patentanwälte PartG
mbB
Postfach 10 37 62
70032 Stuttgart (DE)

(54) **METHODS, DEVICES AND COMPUTER PROGRAMS FOR A WIRELESS TELECOMMUNICATIONS NETWORK**

(57) Methods and devices for operating a user equipment (102) in a wireless telecommunications network (100) in which directional radio beams are selectable for connecting user equipment (102) to the wireless telecommunications network (100), the method comprising: receiving (105) information about a beam reselection state parameter,
selecting (106) a beam reselection state from a plurality of predetermined beam reselection states depending on the received information, and
operating the user equipment (102) in the selected beam reselection state.

Fig. 1

**Description**

**Specification**

**Field of the invention**

Embodiments relate to methods, devices and computer programs for connection control for a wireless telecommunications network.

**Background**

This section introduces aspects that may be helpful in facilitating a better understanding of the invention(s). Accordingly, the statements of this section are to be read in this light and are not to be understood as admissions about what is in the prior art or what is not in the prior art.

Millimeter Wave, mmW, access points, mmAPs, in telecommunications networks ensure the delivery of high data rates to User Equipments, UEs using directional radio beams. However, it is challenging to provide highly reliable and uninterrupted data transfer to the UEs using the mmW technology. Due to the propagation characteristics of mmWs, link blockage may appear due to obstruction in Line of Sight, LOS, connection between serving mmAP and the UE. This blockage may cause high interruption times.

The urban-micro mmW channel is generally characterized by a low number of possible paths, LOS and Non-LOS, between base station and UE, from which in most cases probably only one path, mainly LOS, will be used for transmission with high gain, narrow half-power beam width antenna beams. Due to the shorter wavelengths, very high order phased antenna arrays can be built with very low spatial dimensions. With the help of antenna arrays, highly directional beams can be formed to increase the coverage range and compensate the path loss. This method is well known as beamforming. In order to mitigate the waste of energy and to increase the received signal to noise ratio, SNR, the mmW data transmission is used inherently with beamforming. However, during data transmission, the UE or the mmAP has to constantly track the optimum beam. This is regarded as beamtracking.

For beam selection or beam reselection for a user equipment in a wireless telecommunications network, in which directional radio beams are selectable, it is desirable to reliably identify an optimum beam regardless of movements of the UE in the environment or variations in the environment of the UE. The actual beam to be used by the user equipment in mmW systems are for example selected in a base station, BS, on the basis of best beam index feedback by a UE.

**Summary**

Due to the delay in feedback and the nature of mmW link, anticipatory mechanisms are envisioned to predict the best beam for the user at least until the new feedback comes to the BS. To support this, new beam reselection states are introduced which can influence the best beam index determination and thus the beam selection. Therefore, a beam selection is based inter alia on a newly introduced parameter. The application of beam reselection states is not limited to the selection of best beam. The new beam reselection states may capture the behaviour of a mmW link, dynamicity of environment and/or the rotational conditions; of user equipment, UE, when the UE is moving or when the UE is stationary. The estimation of behaviour through beam reselection states can be used for purposes other than beam selection or beam reselection as well.

It is an object of the present invention to provide an improved method, improved devices and corresponding computer programs for operating user equipment in a wireless telecommunications network and for connecting user equipment to a wireless telecommunications network.

Regarding the abovementioned methods, this objective is achieved by operating a user equipment in a wireless telecommunications network in which directional radio beams are selectable for connecting user equipment to the wireless telecommunications network, wherein the method comprises receiving information about a beam reselection state parameter, selecting a beam reselection state from a plurality of predetermined beam reselection states depending on the received information, operating the user equipment in the selected beam reselection state. Reselection of beams indicates movement of the user equipment in space or changes in the environment of the user equipment. Operating the user equipment according to the beam reselection state thus allows the configuration of the user equipment according to such dynamics, which increases the reliability.

Preferably directional radio links used by the user equipment over time for connecting the user equipment to the wireless telecommunications network are tracked, and the beam reselection state is selected from the plurality of predetermined beam reselection states depending on information about the tracked directional radio links.

Preferably the received information indicates a first number of beam reselections, wherein the information about the tracked directional radio links indicates a second number of beam reselections that occurred in a time interval, and wherein the beam reselection state is selected from the plurality of predetermined beam reselection states depending on a comparison of the first number with the second number. The number of reselections provides a simple measure for the dynamics.

Preferably information about the selected beam reselection state of the user equipment is reported, in particular during a transition from an idle state of the user equipment to a connected state of the user equipment, during a connected state of the user equipment, or before a transition from a connected state to an idle state of the user equipment. The selected state is available at the user equipment when operating the user equipment. Sending the selected state in the aforementioned conditions improves the availability of the information about the state at the control plane entities.

Preferably, information about the beam reselection state of the user equipment is sent in an information element of a radio resource control message. This provides a simple and robust implementation.

Preferably information about the beam reselection state parameter is received in an information element of a radio resource control message. This provides a simple and robust implementation.

Regarding the abovementioned methods, this objective is further achieved by determining a beam reselection state parameter related to a beam reselection state of a user equipment, and sending information about the beam reselection state parameter towards the user equipment. The signalling of a beam reselection state parameter is available this way for configuring the user equipment.

Preferably the beam reselection state parameter indicates the predetermined number of beam reselections.

Preferably information about a beam reselection state of the user equipment is received, in particular during a transition from an idle state of the user equipment to a connected state of the user equipment during a connected state of the user equipment, or before a transition from a connected state to an idle state of the user equipment.

Preferably at least one access point of the wireless telecommunications network available for providing at least one directional radio beam to the user equipment is selected depending on information about the beam reselection state of user equipment, and data for the user equipment is sent to the selected at least one access point. The access point selection can be adjusted to current needs this way. This improves the performance in particular in highly dynamic environment or for highly dynamic movement of user equipment.

Preferably information about the beam reselection state of user equipment is received in an information element of a radio resource control message. This provides a simple and robust implementation.

Preferably information about the predetermined beam reselection state parameter is sent in an information element of a radio resource control message. This provides a simple and robust implementation.

Regarding the abovementioned devices, this objective is achieved by a user equipment for a wireless telecommunications network in which directional radio beams are selectable for connecting the user equipment to the wireless telecommunications network, the user equipment comprising at least a processor, a memory and a transceiver, wherein the user equipment is configured to store at least two different beam reselection states, and determine one of the at least two beam reselection states to operate in.

Preferably the user equipment is configured to receive information about a beam reselection state parameter, select a beam reselection state from a plurality of predetermined beam reselection states depending on the received information, and operate the user equipment in the selected beam reselection state.

Preferably the user equipment is configured to track directional radio links used by the user equipment over time for connecting the user equipment to the wireless telecommunications network, and select the beam reselection state from the plurality of predetermined beam reselection states depending on information about the tracked directional radio links.

Preferably the beam reselection state is selected from the plurality of predetermined beam reselection states depending on a comparison of a first number with a second number, wherein information received by the user equipment indicates the first number, and wherein information about directional radio links tracked by the user equipment in a predetermined time interval indicates a current second number of beam reselections that occurred.

Regarding the abovementioned devices, this objective is further achieved by a network node in a wireless telecommunications network, in which directional radio beams are selectable for connecting user equipment to the wireless telecommunications network, wherein the network node comprises at least a processor and a memory, and is configured to determine a beam reselection state parameter related to a beam reselection state of a user equipment, and send information about the beam reselection state parameter towards the user equipment.

**Brief description of the figures**

Some other features or aspects will be described using the following non-limiting embodiments of devices or methods or computer programs or computer program products by way of example only, and with reference to the accompanying figures, in which:

Fig. 1    schematically depicts a sequence diagram for controlling the connection according to a first embodiment,

Fig. 2    depicts schematically a sequence diagram for controlling the connection according to a second embodiment.

**Description of the embodiments**

Mobile communication systems are for example General Packet Radio Service, GPRS, Universal Mobile Telecommunications System, UMTS, Long Term Evolution, LTE, or 5th-generation mobile communication systems, 5G.

Such mobile communication systems, e.g. LTE or 5G, may comprise a control plane and a user plane. The control plane handles radio-specific administrative functionality, e.g. Radio Resource Control, RRC, for assigning radio resources for transmission, or the paging of mobile transceivers to determine their location or their associated base station transceiver in the mobile communication system. The user plane handles the transfer of user data, e.g. Internet Protocol-packets or calls.

Mobility states of user equipment, UE, are defined for such mobile communication systems. For an evolved universal terrestrial radio access, E-UTRA, such states are defined according to 3GPP TS 136.304 V13.1.0 (2016-04). A cell for providing the radio link to the UE may be selected in heterogeneous networks with small cells overlaid with macro-cells based on these mobility states.

In the following description, Millimeter Wave, mmW, radio links refer to wireless links using radio waves having wavelengths from ten to one millimeter.

The urban-micro mmW channel is generally characterized by a low number of possible paths, LOS and Non-LOS, between base station and UE, from which in most cases probably only one path, mainly LOS, will be used for transmission with high gain, narrow half-power beam width antenna beams. Due to the shorter wavelengths, very high order phased antenna arrays can be built with very low spatial dimensions. With the help of antenna arrays, highly directional beams can be formed to increase the coverage range and compensate the path loss. This method is well known as beamforming. A beam forms a directional radio link between UE and base stations. In order to mitigate the waste of energy and to increase the received signal to noise ratio, SNR, the mmW data transmission is used inherently with beamforming. However, during data transmission, the UE or the mmAP has to constantly track the optimum beam. This is regarded as beam tracking.

Corresponding mmW access points, mmAP and UEs are adapted to exchange data over these wireless data links.

The communications at mmW with beamforming requires the establishment of the link, e.g. initial search for the optimum beam including for access point discovery, and also the tracking of the link, e.g. maintaining the optimum beam, during the data transmission.

In order to predict the best beam, anticipatory mechanisms require channel variations statistics. Once the UE is in connected state, these statistics can be built on the fly with the help of channel quality feedbacks as well as the change of optimum beam index.

According to the methods describe below, the initial phase of communications may benefit from the anticipatory mechanisms. In addition to that, these statistics, if available, are also be used to set suitable parameters for guaranteeing the link reliability or the link monitoring.

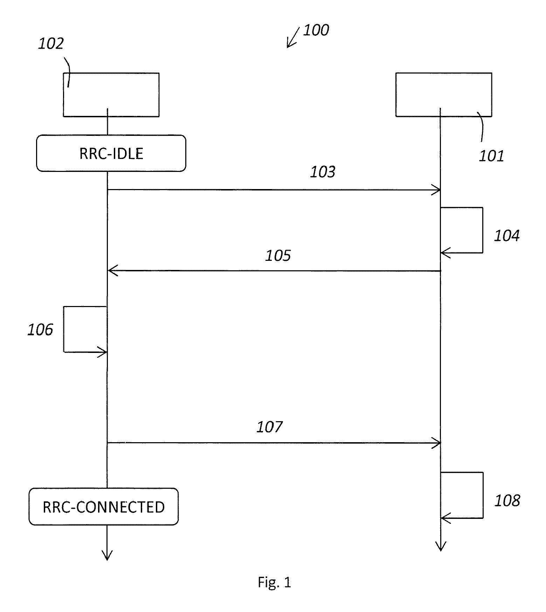

Fig. 1 depicts schematically a sequence diagram for controlling the connection in a telecommunications network 100 according to a first embodiment.

According to the first embodiment, a network node 101 and UE 102 are connectable via a mmW link. The mmW link connects the UE to a mmAP of the telecommunications network 100. The network node 101 may be the mmAP. Radio resource control in this embodiment is implemented using mmW links as described below.

In the following description two embodiments of an interface between UE 102 and network node 101 are described. The interface is used to transfer information regarding a beam reselection state parameter from the network node 101 to the UE 102 and to transfer information regarding a current beam reselection state of UE 102 from UE 102 to the network node 101.

Examples of determining the beam reselection state parameter or the beam reselection state are described below as well. Once the interface is implemented, various other ways of determining the beam reselection state parameter or the beam reselection state may use the interface for transferring the corresponding information.

According to a first embodiment, information about the beam reselection state parameter is broadcast, for example in a system information broadcast according to 3GPP TS 136 331 V13.1.0 (2016-04). A corresponding RRC message may be modified or specifically defined to that end. This way UE 102 receives the beam reselection state parameter information. Additional to the beam reselection state parameter, beam configuration information related to the mmAPs may be sent as well.

UE 102, according to this embodiment, updates the beam reselection state based on the received beam reselection state parameter. Setting of the beam reselection state based on the beam reselection state parameter is as described below.

UE 102, according to this embodiment, is initially in an idle state, e.g. a radio resource control idle state, RRC-IDLE state, according to 3GPP TS 136 331 V13.1.0 (2016-04). Then UE 102 transits into a connected state, e.g. a radio resource control connected state, RRC-CONNECTED state, according to 3GPP TS 136 331 V13.1.0 (2016-04).

During the transition, a first message 103, e.g. a message RRCConnectionRequest according to 3GPP TS 136 331 V13.1.0 (2016-04), is sent by UE 102 to the network node 101 to request establishment of the link. Then UE 102 optionally executes an access point discovery for mmAP before sending the first message 103.

In response to the receipt of the first message 103, the network node 101 determines in a step 104 a second message 105, e.g. a message RRCConnectionSetup according to 3GPP TS 136 331 V13.1.0 (2016-04). The second message 105 is sent to UE 102 as dedicated message.

Upon receipt of the second message 105, UE 102 sets up the connection in a step 106 as described below.

In step 106, a third message 107, e.g. a RRCConnectionSetupComplete according to 3GPP TS 136 331 V13.1.0 (2016-04) and including additional elements as described below, is determined by UE 102. Additional elements may be a beam reselection state or other reporting quantities related to beam reselection.

Additionally a search for an optimum beam may be executed as described below.

A beam selection criterion is set up depending on the received information and a predetermined beam reselection state is selected from a plurality of predetermined beam reselection states depending on the beam selection criterion as described below. The beam selection criterion may be used to select a beam when currently no beam is selected, or to reselect a beam.

Upon selection of a beam, UE 102 sends the third message 107, e.g. the RRCConnectionSetupComplete according to 3GPP TS 136 331 V13.1.0 (2016-04) and including additional elements as described below. The additional elements may be sent in a separate message (not depicted) as well. This way UE 102 informs the network about its beam reselection state when transitioning from idle to connected state.

After sending the third message 107, UE 102 arrives in connected state.

With receipt of the third message, 107, the network node 101 receives information about the beam reselection state of the UE 102. This information may be used further in the network node 101 for determining the beam reselection parameter that is described below.

According to a second embodiment, a network node 101 and UE 102 are connectable via a radio link different from a mmW link. For example a radio link according to the well-known Long Term Evolution is used. In this example, the eNodeB may be the network node 101. The network node 101 is for example a control plane entity. Additional the telecommunications network 100 comprises at least one mmAP for connecting the UE to of the telecommunications network 100 via at least one mmW link. Radio resource control in this embodiment is implemented using the radio link different than the mmW link as described below.

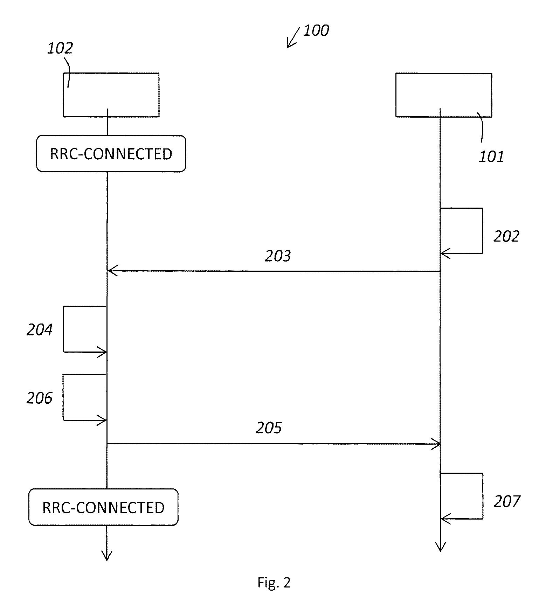

Fig. 2 depicts schematically a sequence diagram for controlling the connection in telecommunications network 100 according to the second embodiment.

UE 102 according to the second embodiment is initially in a connected state, e.g. a radio resource control connected state, RRC-CONNECTED state, according to 3GPP TS 136 331 V13.1.0 (2016-04). Then after a reestablishment of the connection UE 102 remains in connected state, e.g. the radio resource control connected state, RRC-CONNECTED state, according to 3GPP TS 136 331 V13.1.0 (2016-04).

The network node 101 for example determines in a step 202 that a reestablishment of a connection shall be performed. To start the reestablishment of the connection after step 202, a first message 203, e.g. a message RRCConnectionReconfiguration according to 3GPP TS 136 331 V13.1.0 (2016-04) and including additional elements as described below, is sent by the network node 101 to UE 102 to request re-establishment of the link. The additional elements may be the beam reselection state parameter, or beam configuration information related to the mmAPs. The additional elements may be sent in a separate message (not depicted) as well. The first message 203 or the separate message is sent to UE 102 either as broadcast or as dedicated message.

Upon receipt of the first message 203, UE 102 sets up the connection in a step 204 as described below.

The connection is set up depending on a beam reselection state parameter. According to the second embodiment, the beam reselection state parameter is received in the first message 203. Alternatively the beam reselection state parameter may be broadcast (not depicted in Figure 2) for example in a system information broadcast according to 3GPP TS 136 331 V13.1.0 (2016-04). A corresponding RRC message may be modified or specifically defined to that end..

In step 204, a search for an optimum beam may be executed as described below.

A beam selection criterion may be configured depending on the received information and the predetermined beam reselection state is selected from a plurality of predetermined beam reselection states depending on the beam selection criterion as described below.

In response to the receipt of the first message 203, UE 102 determines in a step 205 a second message 206, e.g. a message RRCConnectionReconfigurationComplete according to 3GPP TS 136 331 V13.1.0 (2016-04) and including additional elements as described below. Additional elements may be a beam reselection state or other reporting quantities related to beam reselection. The additional elements may be sent in a separate message (not depicted) as well.

After sending the second message 206, UE 102 remains in connected state.

With the receipt of the second message, 206, the network node 101 receives information about the beam reselection state of the UE 102. This information may be used further in the network node 101 for determining the beam reselection parameter that is described below.

Instead of using a broadcast message to convey the beam reselection state parameter to UE 102, a dedicated message may be sent as well.

For a reestablishment of a connection messages RRCConnectionReestablishment and RRCConnectionReestablishmentComplete according to 3GPP TS 136 331 V13.1.0 (2016-04) and including the aforementioned additional elements may be used.

In the aforementioned embodiments, the beam reselection state parameter sent to the UE 102 has a predetermined value. This value may be updated by the network node 101 based on the beam reselection state and/or other reporting quantities related to beam reselection.

In order to predict the best beam, an anticipatory mechanism may be used. Once UE 102 is in connected state, statistics required for the anticipatory mechanism may be built on the fly with the help of channel quality feedbacks as well as the change of optimum beam index.

However, in an initial phase of communications, e.g. in transition from an idle state to a connected state, or when a beam is suddenly not available, anticipation may not be an option.

The prediction or other statistics, if available, may be used to set a suitable beam reselection state parameter. In particular, the beam reselection state parameter captures an expected channel LOS uncertainty level based on information about the dynamics of a user and the environment of the user. This way, e.g. user movements, relative motion, or variations in the environment can be considered in the prediction or statistics when UE 102 is in idle and/or connected state.

For the embodiments described above, the dynamics of the UE 102 and/or the environment is captured with respect to the mmW coverage and the UE 102 provides this information to the telecommunications network 100 in messages 107 or 206 as described above.

For this purpose, beam reselection states associated to these dynamics and related parameters are defined as described below. Beam reselection states of UE 102 under mmW coverage may represent the movement randomness and/or channel uncertainty level.

These beam reselection states may be updated and maintained by the UE 102 in idle and/or in connected state, e.g. in RRC_IDLE and RRC_CONNECTED state.

The beam reselection states for example depend on the change of the best beams received and/or transmitted by the UE 102. In general the UE 102 in idle state, e.g. in RRC_IDLE state, receives only and receives and/or transmits in connected state, e.g. RRC_CONNECTED state.

In the example three beam reselection states are defined:

1. Default-Beam-Reselection (DBR): This state represents the case where the UE 102 and or environment will have almost no or very slow dynamics. As a result, the UE 102 will receive almost the same beam within the mmAP or the beam reselection rate will be very low. By default the UE 102 assumes itself in this state,

2. Medium-Beam-Reselection (MBR): In correlation with the increase in dynamics of the UE 102 and the environment, the UE 102 should transit to MBR state,

3. High-Beam-Reselection (HBR): In correlation with very high dynamics of the UE 102 and the environment, the UE 102 should transit to HBR state.

An exemplary criterion for selecting the beam reselection state may depend on the number of beam reselections NBR during a predetermined time period TBRmax, e.g. in the range of 0,1 ms to 1 second, in particular 0,1 ms to 1 ms or 1 ms to 10 ms or 10 ms to 100ms:

State Detection Criteria:

Default-Beam-Reselection state criteria:

- Default, or if neither the High-Beam-Reselection state criteria nor the Medium-Beam-Reselection state criteria is met.

Medium-Beam-Reselection state criteria:

- If a number of beam reselections NBR during time period TBRmax exceeds a predetermined first number NBR_M and not exceeds a predetermined second number NBR_H

High-Beam-Reselection state criteria:

- If number of beam reselections during time period TBRmax exceeds the predetermined second number NBR_H

This means that the reselection state is selected from above described plurality of predetermined beam reselection states depending on a comparison of a first number of beam reselections with a second number number of beam reselections that occurred a time interval, e.g. the predetermined time period.

In contrast to the mobility states, the UE 102 may preferably be adapted to count consecutive reselections of beams or reselections between same beams when counting the number of beam reselections. For example, the number of beam reselections NBR is increased, if the same beam is reselected just after a predetermined number of reselections of other beams. In particular, when the same beam is reselected again after only one other beam was selected, this increments the number of beam reselections as well.

The predetermined first number NBR_M is for example in the range of 1 to 10, in particular 2 to 10 or 2 to 5. The predetermined second number NBR_H is for example 10 to 20, or 10 to 30.

The state transitions are as follows:

The UE 102 shall:

if the criteria for High-Beam-Reselection state is detected:

enter High-Beam-Reselection state.

else if the criteria for Medium-Beam-Reselection state is detected:

enter Medium-Beam-Reselection state.

else if criteria for either Medium- or High-Beam-Reselection state is not detected during time period TBRmaxHyst:

enter Default-Beam-Reselection state.

The time period hysteresis TBRmaxHyst is for example in the range of 0,1 ms to 100 ms, in particular 0,1 ms to 19 ms or 10 ms to 100 ms.

For beam reselection, the UE 102 measures available beams and evaluates the best beam. The currently best beam is labelled Serving Beam, SB.

The UE 102 measures the Reference Signal Received Power, RSRP, and the Reference Signal Received Quality, RSRQ, level of the SB and evaluates the beam selection criterion.

The beam selection criterion is for example fulfilled when Reference Signal Received Power, RSRP, of a beam exceeds a predetermined beam selection level of predetermined integer or non-integer value, e.g. 1 dB or 3 dB or 10 dB or in-between, and the Reference Signal Received Quality, RSRQ, exceeds a predetermined beam selection quality of predetermined integer or non-integer value, e.g. 1 dB, 3 dB or 10 dB or in-between.

The beam selection method is carried out considering beams meeting the beam selection criterion.

A beam-ranking criterion Rsb for serving beam and a beam-ranking criterion Rnb for neighboring beam is defined by:

$$Rsb = Qmeas,sb + QHyst\text{-}bs - Qoffsetx$$

$$Rnb = Qmeas,nb - Qoffsety$$

where:

Qmeas is the RBRP measurement quantity used in beam reselections.

QoffsetX, QoffsetY are Offsets that could accommodate different offsets as defined in 3GPP TS 36.304 V13.0.0 (2016-04), § 5.2.4.6 and § 5.2.4.7 and the references therein.

QHyst-bs specifies the hysteresis value for the ranking criteria.

The UE 102 performs ranking of all beams that fulfill the beam selection criterion. The beams shall be ranked according to the Rsb, Rsn criteria given above. If a beam is ranked as the best beam the UE 102 performs beam reselection to that beam.

This means UE 102 measures for example a received power or a received quality of the directional radio links, selects one of the directional radio links having the best received power or best received quality amongst the available directional radio link for connecting UE 102 to the telecommunications network 100.

In accordance with the beam reselection state, BRS, required for mmW systems, in an example, a new information element or a field "beamReselectionState" is added in the RRC message "RRCConnectionSetupComplete".

Moreover beam reselection state parameters, "BeamReselectionStateParameters", may be used. For example the "BeamReselectionStateParameters" contain:

predetermined first number NBR_M,
predetermined second number NBR_H,
predetermined time period TBRmax,
time period hysteresis TBRHystNormal.

In general a information element BeamReselectionStateParameters may contain parameters to determine the UE 120 beam reselection state.

For example a BeamReselectionStateParameters information element is defined as follows:

```
ASN1START


BeamReselectionStateParameters ::=          SEQUENCE {
     t-BR-Evaluation                   ENUMERATED {
          ms1, ms5, ms10, ms100, ms 500, ms1000, spare3,
spare2, spare1},
     t-BR-HystNormal                   ENUMERATED {
          ms1, ms5, ms10, ms100, ms 500, ms1000, spare3,
spare2, spare1},
     n-BR-BeamChangeMedium             INTEGER (1..256),
     n-BR-BeamChangeHigh               INTEGER (1..256)
}


ASN1STOP
```

The corresponding BeamReselectionStateParameters field descriptions are for example:

n-BR-BeamChangeHigh:

The number of beam changes to enter high beam reselection state. Corresponds to NBR_H as described above.

n-BR-BeamChangeMedium:

The number of beam changes to enter medium beam reselection state. Corresponds to NBR_M as described above.

t-BR-Evaluation:

The duration for evaluating criteria to enter beam reselection states. Corresponds to TBRmax as defined above. Value in ms, ms1 corresponds to 1 ms and so on.

t-BR-HystNormal:

The additional duration for evaluating criteria to enter Default Beam Reselection state. Corresponds to TBRmax-Hyst as defined above. Value in ms, ms1 corresponds to 1 ms and so on.

The beam reselection state parameters are then broadcast by network node 101 in system information broadcast of the mmAP according to 3GPP TS 136 331 V13.1.0 (2016-04) or via the radio link other than mmW. The beam reselection state parameters may be sent by dedicated message to UE 102 as well.

Furthermore the UE 102 maintains a log of the number of beam changes "TotalNumBeamChange" in a given time "TimeWindowForObservation" and a vector of cumulative duration "TotalTimeSpendInABeam" spend in a beam coverage, where the index of the vector will represent the beam index.

This way information about tracked directional radio links is stored. The "TotalNumBeamChange" indicates a current number of beam reselections that occurred in a predetermined time interval "TimeWindowForObservation" of e.g. in the range of 1 ms to 10 seconds or more, in particular 1 ms to 10 ms, or 10 ms to 100 ms, e.g. 1 ms, 10 ms, 100 ms, 500 ms or 1 s.

With respect to the reporting of the BRS from UE to the network, the RRC message "RRCConnectionSetupComplete" is used to indicate the states with, for example, 2 bits. For example Normal (no/low) BRS and Medium/High BRS are differentiated in only 1 bit to convey NBRS and MBRS/HBRS information to the network node 101.

To use 1 bit for BRS indication, the following mapping may be used:

0 = Normal (no/low) BRS
1 = Medium/High BRS.

For example the RRCConnectionSetupComplete message that is used to confirm the successful completion of an RRC connection establishment is modified with the following additional sequence added as last entry e.g. after RRCConnectionSetupComplete-v1250-IEs:

```
RRCConnectionSetupComplete-vxxxx-IEs ::= SEQUENCE {
mobilityState-r12          ENUMERATED {normal, medium, high,
spare}    OPTIONAL,
beamReselectionState-rxxxx      ENUMERATED {normal, medium,
high, spare}   OPTIONAL,
mobilityHistoryAvail-r12        ENUMERATED {true}   OPTIONAL,
logMeasAvailableMBSFN-r12       ENUMERATED {true}   OPTIONAL,
nonCriticalExtension            SEQUENCE {}          OPTIONAL
}
```

In this setup, xxxx is the revision/version number.

The RRCConnectionSetupComplete field descriptions may be amended accordingly with an entry:

beamReselectionState

This field indicates the UE beam reselection state (as defined above) just prior to UE going into RRC_CONNECTED state. The UE indicates the value of medium and high when being in Medium-mobility and High-mobility states respectively. Otherwise the UE indicates the value normal.

Accordingly an additional SystemInformationBlockType3 information element may be used:

```
beamReselectionInfoCommon              SEQUENCE {
        q-bs-Hyst                      ENUMERATED {
        dB0, dB1, dB2, dB3, dB4, dB5, dB6, dB8, dB10,
        dB12, dB14, dB16, dB18, dB20, dB22, dB24},
beamStateReselectionPars               SEQUENCE {
        beamReselectionStateParameters
        BeamReselectionStateParameters,                q-
bs-HystSF                              SEQUENCE {
        sf-bs-Medium                   ENUMERATED {

        dB-6, dB-4, dB-2, dB0},
            sf-bs-High
ENUMERATED {
        dB-6, dB-4, dB-2, dB0}
        }
            }
                                       OPTIONAL
Need OP
        },
```

Accordingly, the MeasConfig information element is amended with an additional choice:

```
        speedStatePars           CHOICE {
            release              NULL,
            setup                SEQUENCE {
```

Additionally, the EUTRA-UE-Variables contain in this case an additional import tag:

BeamReselectionStateParameters,

in the corresponding ASN.1 defining EUTRA-UE-Variables DEFINITIONS AUTOMATIC TAGS.
If the UE 102 is in High- or Medium-Beam-Reselection state, the UE 102 preferably applies the similar rules as specified for speed dependent scaling rules. These are for example defined in 3GPP TS 36.304 V13.1.0 (2016-04), §5.2.4.3.1.

If neither Medium- nor High-Beam-Reselection state is detected:

no scaling is applied.

```
mobilityStateParameters    MobilityStateParameters,
beamReselectionState       BeamReselectionStateParameters,
timeToTrigger-SF           SpeedStateScaleFactors
                        }
            }
```

OPTIONAL,


If High-Beam-Reselection state is detected:

Add the sf-BS-High of "Speed dependent ScalingFactor for QHyst-bs" to QHyst-bs if sent on system information,

If Medium-mobility state is detected:

Add the sf-BS-Medium of "Speed dependent ScalingFactor for QHyst-bs for medium mobility state" to QHyst-bs if sent on system information.

The aforementioned example defines three coarse levels classifying channel uncertainty in terms of Beam-Reselection States of UE 102. Further fine classification is also possible with additional beam reselection states using respective thresholds.

According to an embodiment, mobility and location prediction methods are used for prediction of the movement.

In general such prediction methods require a level of randomness in the movement as input parameter. F. Bai and A. Helmy, "A Survey of Mobility Modeling and Analysis in Wireless Ad Hoc Networks", Book chapter in Wireless Ad Hoc and Sensor Networks, Kluwer academic Publishers, June 2004 describes an example for a mobility model used for prediction. Further applications of the prediction methods and models to mmW systems are described in A. W. Doff, Kishor Chandra, R. Venkatesha Prasad: "Sensor Assisted Movement Identification and Prediction for Beamformed 60 GHz Links and Cheffena, Michael "Doctoral thesis: Modeling and Prediction of Millimeter Wave length Channels" March 2015. In principle, with the help of movement anticipation, these methods are able to predict the best beam to be used for high quality link between the UE and the mmAP. The UE based Beam Reselection State Estimate, BRSE, in RRC-IDLE may be used either as is or with some minor changes to share some form of mmW channel dynamics with the network during its transition to RRC-CONNECTED state. As a first step, depending upon the BRS, the network or the UE 102 may decide upon the mobility model and the prediction algorithm to be used for predicting the best beams. For instance, if the UE 102 is in normal BRS, the network may decide to use a simple low-complexity model for prediction according to A.W. Doff, Kishor Chandra, R. Venkatesha Prasad: "Sensor Assisted Movement Identification and Prediction for Beamformed 60 GHz Links". Otherwise in case of high and/or medium BRS a sophisticated model can be used Cheffena, Michael "Doctoral thesis: Modeling and Prediction of Millimeter Wave length Channels or Paul Marinier, Gilles-Y. Delisle, Larbi Talbi," A coverage prediction technique for indoor wireless millimeter waves system", Springer Journal on Wireless Personal Communications, September 1996, Volume 3, Issue 3, pp 257-271.

In some cases, the model requires the statistical parameters which represent the randomness in movements. For example, using the Gauss-Markov model with varying mean, , variance, and memory level, the accurate location prediction depends upon the accurate dynamic estimation of the Gauss-Markov parameters, as well as the degree of variations in these parameters between location updates. This is described for example in B. Liang and Z. J. Haas, "Predictive distance-based mobility management for PCS networks," INFOCOM '99. Eighteenth Annual Joint Conference of the IEEE Computer and Communications Societies. Proceedings. IEEE, New York, NY, 1999, pp. 1377-1384 vol.3. Accordingly, for dynamic parameter estimation, in general, a parameter estimation window could be chosen such that it is small enough for the mobile movement to remain approximately stationary but large enough to provide sufficient amount of data samples.

Hence, upon the transition from RRC-IDLE to RRC-CONNECTED state, log records could be used to estimate model parameters for initialization phase of the algorithm.

The BRS may then provide a parameter estimation window size for further update of parameters during RRC CONNECTED STATE. If high BRS is indicated then the parameter estimation window size for parameter update could be shorter and if normal BRS is indicated then it could be longer

According to another embodiment, a Controlling Node, CoN, may manage the mmAP in Multi Connectivity Clusters, MC-clusters. The network node 101 may be configured as the CoN. In this mmW overlay scenario the CoN may be adapted to differentiate between mmAPs with respect to the following classification:

1. Serving State: The mmAP in serving state is characterized as the one which is engaged in data transmission towards the UE 102,

2. Context and Data Prepared State, CDPS: The mmAP in context and data prepared state receives context of the UE 102 and data for the UE 102 from the CoN. It holds the data in a buffer; however, it is not engaged in the transmission of data to the UE 102.

3. Context Prepared State, CPS: The mmAP in context prepared state receives only the context of the UE 102 from the CoN.

Context means information related to the identity of the UE 102 and/or to the capabilities and/or requirements the UE 102 has regarding mmW data transmission.

Based on the BRS of the UE 102, the network node 101 can decide how many mmAPs shall be prepared for CDPS and CPS.

According to another embodiment alternatively or in addition to the embodiment described above, a multi connectivity manager may be used in a mmW overlay network assisted by another radio network not using mmW connections. The multi connectivity manager is for example the network node 101. The multi connectivity manager may use the BRS indication to decide whether to enable the mmW connectivity with the currently reported best mmAP or not.

According to another embodiment, additionally or alternatively to the aforementioned embodiments, depending on the current beam reselection state, particular applications may be optimized.

Mobility states estimates are commonly used to set the RRC-Inactivity timer values. It has been shown by many studies that at lower mobile speeds, it is better to maintain the UE 102 in connected mode. This corresponds to setting the RRC inactivity timer to infinity. At medium/high speeds, it is better to set the RRC inactivity timer to move the UE 102 into idle based on traffic activity. In the example, the RRC-inactivity timer is used to detect the radio inactivity of the UE 102. Upon the successful timer overrun, the connection with UE 102 is released by the network node 101, e.g. by means of a S1 Connection Release Procedure.

In case of mmW systems, in particular for standalone mmW systems without available radio links other than mmW, only mobility state considerations are not sufficient.

Even if the UE 102 is in normal mobility state, it can be in high BRS due to the dynamics of the environment. Therefore, BRS may be used on top of mobility states for a better estimation of the RRC inactivity timer.

The RRC inactivity timer is configured for example based on the mobility states according to 3GPP TS 136.304 V. 13.1.0 (2016-04) and the beam reselection state:

1. Normal Mobility State: Longer RRC-inactivity timer,

2. Normal Mobility State + NBR State: Longer RRC-inactivity timer,

3. Normal Mobility State + HBR State: Shorter RRC-inactivity timer.

The terms longer RRC-inactivity timer and shorter RRC-inactivity timer mean, that the RRC-inactivity timer is set to a value longer or shorter than a predetermined RRC-inactivity timer e.g. in the range of 0 to infinity, in particular 4 to 10 seconds, 1 ms to 1 second to 1 ms to 10 ms. For example longer RRC-inactivity timer refers to setting the RRC-inactivity timer to a larger value than aforementioned values.

For example shorter RRC-inactivity timer refers to setting the RRC-inactivity timer to a shorter value than aforementioned values.

In case of Normal Mobility State + HBR State, the UE 102 may not have radio activity, but if HBR state is indicated by the UE 102, it will be switching beams quickly; consequently it will trigger frequent beam reports in uplink. In order to avoid these reports, it is good to have shorter RRC-inactivity timer.

Accordingly the telecommunications network 100 can provide better performance with respect to high reliability, high robustness, low latency, reduced handover failures and reduced radio link failures. The UE 102 can save energy and improve many algorithms, e.g. beam-tracking algorithm, by initializing with proper BRS. Based on the BRS, optimum initial search and mmAP detection mechanisms with minimum signalling overhead can be defined for the UE 102, e.g. by the network node 101.

The UE 102 is a device for wireless data transmission in the telecommunications network 100.

UE 102 comprises at least a processor, memory and a transceiver, and is adapted for performing the UE side of the method described above.

This means that the user equipment 102 operates in a wireless telecommunications network 100, in which directional radio beams are selectable for connecting the user equipment 102 to the wireless telecommunications network 100. The user equipment 102 comprises is configured to store at least two different beam reselection states, in particular aforementioned beam reselection stats. Furthermore user equipment 102 is configured to determine one of the at least two beam reselection states to operate in, in particular according to the method described above.

Alternatively or additionally, user equipment 102 may be configured to track directional radio links used by the user equipment 102 over time for connecting the user equipment 102 to the wireless telecommunications network 100, in particular as described above. Furthermore in this case user equipment 102 may be configured to select the beam reselection state from the plurality of predetermined beam reselection states depending on information about the tracked directional radio links, in particular as described above.

The network node 101 is a further device, e.g. an eNodeB, for wireless data transmission in the telecommunications network 100, wherein the network node 101 comprises at least a further processor, further memory and a further transceiver, and is adapted for performing the network side of the method described above.

The transceivers 613 and 623 are connectable in the example for uplink via a radio communications link 630 according to the aforementioned LTE standard.

User Equipment (UE) could be implemented as a device with a radio interface, e.g. smartphone, tablet, smartwatch, sensor, actuator, equipment inside a vehicle, machine-to-machine equipment, or else. The radio network is e.g. an OFDM (Orthogonal Frequency Division Multiplex) type network, e.g. UF-OFDM, F-OFDM, ZT-s-OFDM, P-OFDM, FC-OFDM, or another multi-carrier network, e.g. FS-FBMC, QAM-FBMC, etc. E.g. QAM - Quadrature Amplitude Modulation and/or QPSK - Quadrature Phase Shift Keying are used as modulation technique. A network node could be implemented as a base station or a processing part of a base station. The base station could be an LTE eNodeB, a 5G transmission point, a WiFi access point, or else. The base station is in particular suitable to serve a radio cell and to connect user equipment inside the cell to the radio network. The base station is e.g. implemented as a stand-alone equipment including e.g. a processing part and a radio interface, or as a processing part and a remotely located so called RRH (Remote Radio Head). The processing part is e.g. implemented using a processor and a memory. The processor is implemented using e.g. a DSP, FPGA, or the like or a combination thereof. The memory is implemented using e.g., a RAM, ROM, DDR, Flash memory, or the like, or a combination thereof. The memory stores e.g. computer readable instructions, thus instructions executable by the processor. The processing part processes data and control info to be transmitted to the user equipment and generates messages including the data and/or control info to be transmitted, e.g. RRC Connection Request Message, RRC Connection Reconfiguration message, RRC Connection Complete message, RRC Connection Setup message, etc., and manages establishment, maintenance and release of an RRC connection between the UE and E-UTRAN and UE measurement reporting and control of the reporting.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the FIGs., including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, other diagrams and the like represent various processes which may be substantially represented in computer readable medium and so executed by a computer or processor, whether or not such computer or processor is explicitly shown.

At least parts of the above described radio communications network including sender or receiver could be implemented using network functions virtualization (NFV). NFV is a network architecture that makes use of technologies of computer virtualization. Entire network equipment like sender or receiver or parts thereof or part of their functions can be virtualized using software building blocks that may connect, or interact, to create communication services. A virtualized network function of e.g. a sender or receiver may include at least one virtual machine running different software and processes, on top of standard high-volume servers, switches and storage, or a cloud computing infrastructure, instead of having customized hardware appliances for each network function. As such a sender or receiver function may be implemented in a computer program using a computer program product embodied on a non-transitory computer readable medium for performing operations, wherein the computer program product comprises instructions, that when executed by a processor, perform the operations of the specific eNodeB, network node or UE function.

**Claims**

1. A method of operating a user equipment in a wireless telecommunications network (100) in which directional radio beams are selectable for connecting user equipment (102) to the wireless telecommunications network (100), the method comprising:

   receiving (105, 203) information about a beam reselection state parameter,
   selecting (106, 204) a beam reselection state from a plurality of predetermined beam reselection states depending on the received information, and
   operating the user equipment (102) in the selected beam reselection state.

2. The method of claim 1, comprising
   tracking directional radio links used by the user equipment (102) over time for connecting the user equipment (102) to the wireless telecommunications network (100), and
   selecting (106, 204) the beam reselection state from the plurality of predetermined beam reselection states depending on information about the tracked directional radio links.

3. The method of claim 2, wherein the received information indicates a first number of beam reselections, wherein the information about the tracked directional radio links indicates a second number of beam reselections that occurred in a time interval, and wherein the beam reselection state is selected from the plurality of predetermined beam reselection states depending on a comparison of the first number with the second number.

4. The method according to any of the preceding claims, comprising
   reporting information about the selected beam reselection state of the user equipment (102), in particular during a transition from an idle state of the user equipment (102) to a connected state of the user equipment (102), during a connected state of the user equipment (102), or before a transition from a connected state to an idle state of the user equipment (102).

5. The method according to claim 4, wherein information about the beam reselection state of the user equipment (102) is sent in an information element of a radio resource control message.

6. The method according to claim 1, wherein information about the beam reselection state parameter is received in an information element of a radio resource control message.

7. A method for a wireless telecommunications network (100) in which directional radio beams are selectable for connecting user equipment (102) to the wireless telecommunications network (100), the method comprising:

   determining a beam reselection state parameter related to a beam reselection state of a user equipment (102), and sending information about the beam reselection state parameter towards the user equipment (102).

8. The method of claim 7, wherein the beam reselection state parameter indicates a number of beam reselections.

9. The method of any of claims 7 or 8, comprising
   receiving (107, 206) information about a beam reselection state of a user equipment (102), in particular during a transition from an idle state of the user equipment (102) to a connected state of the user equipment (102), during an connected state of the user equipment (102), or before a transition from a connected state to an idle state of the user equipment (102).

10. The method of claim 9, comprising

selecting at least one access point of the wireless telecommunications network (100) available for providing at least one directional radio beam to the user equipment (102) depending on information about the beam reselection state of user equipment (102),

sending data for the user equipment (102) to the selected at least one access point.

11. The method according to any of the claims 7 to 10, wherein information about the beam reselection state of user equipment (102) is received in an information element of a radio resource control message.

12. The method according to any of the claims 7 to 11, wherein information about the beam reselection state parameter is sent in an information element of a radio resource control message.

13. A user equipment (102) for a wireless telecommunications network (100), in which directional radio beams are selectable for connecting user equipment (102) to the wireless telecommunications network (100), the user equipment (102) comprising at least a processor, a memory and a transceiver, wherein the user equipment (102) is configured to:

store at least two different beam reselection states, and
determine one of the at least two beam reselection states to operate in.

14. The user equipment (102) according to claim 13,
wherein the user equipment (102) is configured to:

receive (105, 203) information about a beam reselection state parameter,
select (106, 204) a beam reselection state from a plurality of predetermined beam reselection states depending on the received information, and
operate the user equipment (102) in the selected beam reselection state.

15. The user equipment (102) according to claim 13,
wherein the user equipment (102) is configured to:

track directional radio links used by the user equipment (102) over time for connecting the user equipment (102) to the wireless telecommunications network (100), and
select (106, 204) the beam reselection state from the plurality of predetermined beam reselection states depending on information about the tracked directional radio links.

16. The user equipment (102) according to claim 14 or 15, wherein the beam reselection state is selected from the plurality of predetermined beam reselection states depending on a comparison of a first number with a second number, wherein information received by the user equipment (102) indicates the first number, and wherein information about directional radio links tracked by the user equipment (102) in a predetermined time interval indicates a current second number of beam reselections that occurred.

17. A network node (101) in a wireless telecommunications network (100), in which directional radio beams are selectable for connecting user equipment (102) to the wireless telecommunications network (100), wherein the network node (101) comprises at least a processor and a memory, and is configured to:

determine a beam reselection state parameter related to a beam reselection state of a user equipment (102), and send information about the beam reselection state parameter towards the user equipment (102).

Fig. 1

Fig. 2

Europäisches
Patentamt
European
Patent Office
Office européen
des brevets

# EUROPEAN SEARCH REPORT

Application Number

EP 16 29 0154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | "3rd Generation Partnership Project; Technical Specification Group Radio Access Network; Evolved Universal Terrestrial Radio Access (E-UTRA); Radio Resource Control (RRC); Protocol specification (Release 13)", 3GPP DRAFT; 36331-D10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 April 2016 (2016-04-01), XP051081790, Retrieved from the Internet: URL:http://www.3gpp.org/ftp/tsg_ran/WG2_RL2/Specifications/201603_final_specs_after_RAN_71/ [retrieved on 2016-04-01] * page 233 - page 234 * * page 259 - page 262 * * page 25 - page 29 * ----- | 1-17 | INV. H04B7/04 H04W36/00 H04B7/06 |
| X,D | "3 Generation Partnership Project; Technical Specification Group Radio Access Network; Evolved Universal Terrestrial Radio Access (E-UTRA); User Equipment (UE) procedures in idle mode (Release 13)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.1.0, 30 March 2016 (2016-03-30), pages 1-43, XP051088473, [retrieved on 2016-03-30] * pages 21-22 * ----- -/-- | 1-17 | TECHNICAL FIELDS SEARCHED (IPC) H04B H04W |

The present search report has been drawn up for all claims

| Place of search | Date of completion of the search | Examiner |
|---|---|---|
| Munich | 2 February 2017 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/142117 A1 (RAHMAN MD SAIFUR [US] ET AL) 19 May 2016 (2016-05-19)<br>* paragraphs [0004], [0132]; claim 1; figure 5 * | 1,7,13,17 | |
| A | "RLM and RLF in HF NR",<br>3GPP DRAFT; R2-164899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. RAN WG2, no. Gothenburg, Sweden; 20160822 - 20160826<br>12 August 2016 (2016-08-12), XP051142724,<br>Retrieved from the Internet:<br>URL:http://www.3gpp.org/ftp/tsg_ran/WG2_RL2/TSGR2_95/Docs/<br>[retrieved on 2016-08-12]<br>* page 1 * | 1-17 | |

**TECHNICAL FIELDS SEARCHED (IPC)**

The present search report has been drawn up for all claims

| Place of search | Date of completion of the search | Examiner |
|---|---|---|
| Munich | 2 February 2017 | Franz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 29 0154

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2017

| Patent document cited in search report | Publication date | Patent family member(s) | | Publication date |
|---|---|---|---|---|
| US 2016142117 A1 | 19-05-2016 | US | 2016142117 A1 | 19-05-2016 |
| | | WO | 2016080743 A1 | 26-05-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 136 331 V13.1.0,* April 2016
- *3GPP TS 36.304 V13.1.0,* April 2016
- A Survey of Mobility Modeling and Analysis in Wireless Ad Hoc Networks. **F. BAI ; A. HELMY.** Wireless Ad Hoc and Sensor Networks. Kluwer academic Publishers, June 2004

- **CHEFFENA, MICHAEL.** Doctoral thesis: Modeling and Prediction of Millimeter Wave length Channels or Paul Marinier, Gilles-Y. Delisle, Larbi Talbi,'' A coverage prediction technique for indoor wireless millimeter waves system. *Springer Journal on Wireless Personal Communications,* September 1996, vol. 3 (3), 257-271
- Predictive distance-based mobility management for PCS networks. **B. LIANG ; Z. J. HAAS.** INFOCOM '99. Eighteenth Annual Joint Conference of the IEEE Computer and Communications Societies. Proceedings. IEEE, 1999, vol. 3, 1377-1384
- *3GPP TS 136.304 V. 13.1.0,* April 2016